# EUROPÄISCHE PATENTSCHRIFT

(11) **EP 3 339 048 B1**
(45) Veröffentlichungstag und Bekanntmachung des Hinweises auf die Patenterteilung: **04.11.2020**
(21) Anmeldenummer: 17002058.0
(22) Anmeldetag: 21.12.2017
(51) Int. Cl.: B42D 25/324, B42D 25/328, B42D 25/364, B42D 25/369, B42D 25/373, B42D 25/378, B42D 25/29, B42D 25/425, B42D 25/45, G02B 5/09

(54) **SICHERHEITSELEMENT MIT REFLEKTIVEM FLÄCHENBEREICH**
SECURITY ELEMENT HAVING REFLECTIVE SURFACE AREA
ÉLÉMENT DE SÉCURITÉ AYANT UNE ZONE DE SURFACE RÉFLÉCHISSANTE

(30) Priorität: 22.12.2016 DE 102016015393
(43) Veröffentlichungstag der Anmeldung: 27.06.2018
(73) Patentinhaber: Giesecke+Devrient Currency Technology GmbH, 81677 München (DE)
(72) Erfinder: RAHM, Michael, 83646 Bad Tölz (DE); PFEIFFER, Matthias, 81675 München (DE); BICHLMEIER, Stefan, 85521 Riemerling (DE); FUHSE, Christian, 83624 Otterfing (DE); GERHARDT, Thomas, 81549 München (DE); LOCHBIHLER, Hans, 80337 München (DE); SCHERER, Maik Rudolf Johann, 82491 Grainau (DE); AMTHOR, Falk, 83714 Miesbach (DE)

(56) Entgegenhaltungen:
- WO-A1-2006/013215
- WO-A1-2016/096094
- WO-A1-2017/011476
- WO-A2-2011/066990
- DE-A1-102014 011 425

## Beschreibung

Die Erfindung betrifft ein Sicherheitselement zur Absicherung von Wertgegenständen, mit einem reflektiven Flächenbereich, dessen Ausdehnung eine x-y-Ebene definiert und der bei Betrachtung in reflektiertem Licht ein dreidimensionales Reliefmotiv erzeugt. Die Erfindung betrifft auch ein Verfahren zur Herstellung eines solchen Sicherheitselements sowie einen entsprechend ausgestatteten Datenträger.

Datenträger, wie etwa Wert- oder Ausweisdokumente, oder andere Wertgegenstände, wie etwa Markenartikel, werden zur Absicherung oft mit Sicherheitselementen versehen, die eine Überprüfung der Echtheit der Datenträger gestatten und die zugleich als Schutz vor unerlaubter Reproduktion dienen. Eine besondere Rolle bei der Echtheitsabsicherung spielen Sicherheitselemente mit betrachtungswinkelabhängigem oder dreidimensionalem Erscheinungsbild, da diese selbst mit modernsten Kopiergeräten nicht reproduziert werden können.

Zur Erzeugung von dreidimensional erscheinenden Darstellungen können folienbasierte Sicherheitselemente mit Mikrospiegeln eingesetzt werden, die das Reflexionsverhalten gekrümmter Oberflächen simulieren. Damit lassen sich beispielsweise Wertzahlen oder Symbole in einer attraktiven Weise darstellen. Allerdings wirken die Darstellungen bei der Imitation komplexerer Objekte und insbesondere bei Portraits unnatürlich metallisch, vor allem dann, wenn das Portrait aus bestimmten Beobachtungs- oder Beleuchtungssituationen invertiert erscheint. Darüber hinaus können bestimmte Informationen nur schlecht in der Wölbung der dreidimensionalen Darstellung kodiert werden. Beispielsweise ist bei Portraitdarstellungen die Pupille im Auge primär durch ihre Farbe und nicht durch ihre Form bestimmt.

Ein Sicherheitselement mit einem Flächenbereich, der in eine Vielzahl von Pixeln aufgeteilt ist, wobei die Mehrzahl der Pixel jeweils mehrere optisch wirksame Facetten mit gleicher Orientierung pro Pixel aufweisen und die Facetten so orientiert sind, dass für einen Betrachter der Flächenbereich als gegenüber seiner tatsächlichen Raumform vor- und/oder zurückspringende Fläche wahrnehmbar ist, ist insbesondere in der Druckschrift WO 2011/066990 A2 beschrieben.

Aus der Druckschrift WO 2006/013215 A1 ist eine diffraktive Vorrichtung und ein Verfahren zum Erzeugen eines dreidimensionalen, vorzugsweise achromatischen Bildes bekannt, das insbesondere eine reale oder eine imaginäre Reliefszene nachstellt.

Die Druckschrift WO 2016/096094 A1 beschreibt ein optisch variables Durchsichtssicherheitselement mit einem ebenen, optisch variablen Flächenmuster, das in Durchsicht ein farbiges Erscheinungsbild mit einem betrachtungswinkelabhängigen mehrfarbigen Farbwechsel zeigt. Das optisch variable Flächenmuster enthält eine Vielzahl von im Wesentlichen strahlungsoptisch wirkenden Facetten, die mit einer Interferenzschicht mit einem im Durchlicht betrachtungswinkelabhängigen Farbwechsel versehen sind.

Die Druckschrift DE 10 2014 011 425 A1 befasst sich mit einem Sicherheitselement, das mindestens ein Bild bereitstellt, das durch eine Gitterstruktur, die eine Vielzahl von rinnenförmigen Mikrokavitäten aufweist, gebildet ist.

Die Druckschrift WO 2017/011476 A1, veröffentlicht am 19.01.2017, beschreibt ein optisches Produkt, das eine Oberfläche umfasst, die bei Beleuchtung konfiguriert ist, um durch reflektiertes oder durchgelassenen Licht ein erstes von zwei 3D-Bildern in einem ersten Betrachtungswinkel zu reproduzieren, ohne das zweite 3D-Bild zu reproduzieren, und das zweite 3D-Bild in einem zweiten Betrachtungswinkel zu reproduzieren, ohne das erste 3D-Bild zu reproduzieren.

Eine gerade im Bereich von Sicherheitselementen weit verbreitete Technik, die einer ebenen Folie ein dreidimensionales Erscheinungsbild verleiht und dem Betrachter zusätzlich eine Farbinformation vermitteln kann, ist die Holographie. Für die Anwendung bei Sicherheitsmerkmalen haben holographische Techniken jedoch auch Nachteile. Zum einen hängt die Qualität der dreidimensionalen Darstellung eines Hologramms stark von den Beleuchtungsverhältnissen ab und die Darstellungen von Hologrammen sind insbesondere bei diffuser Beleuchtung oft nur schwer zu erkennen. Darüber hinaus sind Hologramme inzwischen im Alltag an vielen Stellen präsent, so dass ihre besondere Stellung als Echtheitskennzeichen schwindet.

Ausgehend davon liegt der Erfindung die Aufgabe zugrunde, ein Sicherheitselement der eingangs genannten Art anzugeben, das die Nachteile des Standes der Technik vermeidet und das insbesondere ein natürlich wirkendes dreidimensionales Reliefmotiv mit einer über die reine Wölbung des Reliefmotivs hinausgehenden Bildinformation darstellen kann.

Diese Aufgabe wird durch die Merkmale der unabhängigen Ansprüche gelöst. Weiterbildungen der Erfindung sind Gegenstand der abhängigen Ansprüche.

Gemäß der Erfindung enthält ein in Anspruch 1 definiertes gattungsgemäßes Sicherheitselement einen reflektiven Flächenbereich, dessen Ausdehnung eine x-y-Ebene definiert und der bei Betrachtung in reflektiertem Licht ein dreidimensionales Reliefmotiv mit einem vorgegebenen Graustufenmuster mit unterschiedlichen Helligkeitswerten erzeugt, wobei
- der reflektive Flächenbereich eine Vielzahl von Mikro-Hellfeldern und Mikro-Dunkelfeldern enthält,
- die Mikro-Hellfelder durch reflektive Facetten gebildet sind, die so orientiert sind, dass der reflektive Flächenbereich für einen Betrachter als dreidimensionales Reliefmotiv mit einer gegenüber seiner tatsächlichen Raumform vor- und/oder zurückspringenden Oberfläche wahrnehmbar ist,
- die Mikro-Dunkelfelder im Wesentlichen aus allen Betrachtungsrichtungen dunkel erscheinen, und
- der lokale relative Anteil der Mikro-Hellfelder und der Mikro-Dunkelfelder des reflektiven Flächenbereichs so eingestellt ist, dass sie in reflektiertem Licht zusammen den lokalen Helligkeitswert des vorgegebenen Graustufenmusters erzeugen.

Durch diese Maßnahmen kann das Sicherheitselement trotz einer außerordentlich flachen Gestaltung dreidimensional erscheinende Motive erzeugen, die durch das zusätzlich vorgesehene Graustufenmuster mit einer hohen Plastizität und Natürlichkeit erscheinen.

Die Mikro-Hellfelder und Mikro-Dunkelfelder weisen in der x-y-Ebene in zumindest einer, vorzugsweise in allen Richtungen Abmessungen unterhalb von 200 µm, bevorzugt unterhalb von 100 µm, besonders bevorzugt unterhalb von 30 µm auf. Zugleich weisen die Facetten vorteilhaft in der x-y-Ebene eine Abmessung größer als 3 µm, bevorzugt größer als 4 µm auf, um strahlenoptisch und ohne störende Farbaufspaltungen durch Beugungseffekte zu wirken.

In einer vorteilhaften Ausgestaltung sind die Mikro-Hellfelder und Mikro-Dunkelfelder periodisch angeordnet, vorzugsweise in einem regelmäßigen zweidimensionalen Punktraster. Es kommen allerdings auch andere vorteilhafte Anordnungen in Betracht, beispielsweise eine Anordnung der Hell- und Dunkelfelder in einem regelmäßigen Linienraster oder in einem stochastischen Raster. Auch können die Mikro-Hellfelder und die Mikro-Dunkelfelder sowohl eine unregelmäßige Anordnung als auch eine unregelmäßige Umrissform aufweisen. Mit Vorteil bilden die Mikro-Hellfelder und Mikro-Dunkelfelder eine Parkettierung, also eine lückenlose und überlappungsfreie Überdeckung des von dem reflektiven Flächenbereich eingenommenen Teils der x-y-Ebene. Die Parkettierung kann periodisch sein, etwa mit quadratischen, rechteckigen oder hexagonalen Mikro-Hellfeldern und Mikro-Dunkelfeldern, kann aber auch aperiodisch oder quasiperiodisch sein, und etwa eine Penrose-Parkettierung darstellen.

In einer vorteilhaften Ausgestaltung sind die Mikro-Hellfelder zumindest teilweise in Form reflektiver Pixel ausgebildet, die jeweils mehrere, gleich orientierte reflektive Facetten aufweisen. Die reflektiven Pixel und/ oder einzelne reflektive Facetten können mit einem Umriss in Form eines Motivs, insbesondere in Form von Zeichen oder Symbolen ausgebildet sein. Besondere Umrissformen können als zusätzliches Echtheitsmerkmal eingesetzt werden, das nur unter Vergrößerung sichtbar ist.

Die Bedingung, dass die Mikro-Dunkelfelder im Wesentlichen aus allen Betrachtungsrichtungen dunkel erscheinen, lässt zu, dass es eine Betrachtungsrichtung oder einen kleinen Betrachtungswinkelbereich gibt, in dem dies nicht zutrifft, beispielsweise im Fall gleich orientierter, stark verkippter Mikrospiegel. Mit Vorteil erscheinen die Mikro-Dunkelfelder über einen Betrachtungswinkelbereich von mehr als 45 °, bevorzugt von mehr als 60 ° und besonders bevorzugt von mehr als 90 ° dunkel, so dass das Sicherheitselement um diesen Betrag gekippt werden kann, ohne dass die Mikro-Dunkelfelder hell erscheinen.

In vorteilhaften Ausgestaltungen ist vorgesehen, dass die Mikro-Dunkelfelder durch Felder mit Dunkelstrukturen, durch mit Dunkelstrukturen versehene orientierte Facetten, durch gleich orientierte, gegen die x-y-Ebene stark verkippte reflektierende Facetten, oder durch dunkle, insbesondere schwarze Farbfelder gebildet sind.

Als Dunkelstrukturen werden dabei Strukturen bezeichnet, die einer Oberfläche in einem weiten Betrachtungswinkelbereich ein dunkles Erscheinungsbild verleihen. Ein vorteilhaftes Beispiel für Dunkelstrukturen sind Mikrokavitätenstrukturen, also Strukturen mit einer Mehrzahl nebeneinander liegender Mikrokavitäten, welche jeweils in einer zur Oberseite parallelen Raumrichtung eine Ausdehnung von 0,5 µm bis 3 µm, vorzugsweise von 0,7 µm bis 2 µm aufweisen. Die Mikrokavitäten weisen bevorzugt eine halbsphärische Vertiefung mit einem Verhältnis Tiefe/ Aperturweite > 0.5 auf und sind vorteilhaft hexagonal oder orthogonal nebeneinander angeordnet.

Als Dunkelstrukturen können mit Vorteil auch sogenannte Mottenaugenstrukturen eingesetzt werden, bei denen es sich um regelmäßige oder stochastische Noppenstrukturen aus nur wenige hundert Nanometer großen Noppen handelt. Mottenaugenstrukturen absorbieren einen hohen Anteil des einfallenden Lichts und erscheinen daher stets dunkel.

Die Dunkelstrukturen können auch durch metallisch bedampfte Randomoberflächen gebildet sein, welche eine Brechzahlgradientenschicht ausbilden und eine Absorptionswirkung haben. Die Strukturtiefe liegt dabei bevorzugt bei mehr als 50 nm und der mittlere Abstand von benachbarten Erhebungen liegt unter 500 nm. Solche Randomoberflächen können auf Kunststoffsubstraten wie etwa PMMA in einem Plasmaätzprozess erzeugt werden.

Eine weitere Möglichkeit für Dunkelstrukturen besteht in dem Einsatz eines metallisierten Kreuzgitters mit einer Subwellenlängenperiode unterhalb von 420 nm. Zur Lichtabsorption können als Dunkelstrukturen auch zweidimensionale periodische Subwellenlängengitter eingesetzt werden, wobei die Geometrieparameter der Gitter so gewählt sind, dass es zu maximaler Lichtabsorption kommt und die mittlere Reflexion unterhalb von 20%, insbesondere unterhalb von 10% liegt.

Dunkelstrukturen führen nicht zwingend zu schwarzen Gestaltungen, das dunkle Erscheinungsbild kann auch farbig, beispielsweise rot oder blau erscheinen. Vorteilhaft aber nicht zwangsweise werden dabei dunkle Farben gewählt.

Schließlich können die Dunkelstrukturen auch durch eine Anordnung einer Vielzahl metallisch beschichteter, eng benachbarter Vertiefungen mit hohem Tiefen-zu-Breiten-Verhältnis gebildet sein. Das Tiefen-zu-Breiten-Verhältnis beträgt dabei mindestens 1:2, bevorzugt mindestens 1:1, besonders bevorzugt mindestens 2:1.

Die Mikro-Dunkelfelder können dabei nicht nur durch Felder mit Dunkelstrukturen, sondern auch durch mit Dunkelstrukturen versehene orientierte Facetten gebildet sein. Dabei können alle beschriebenen Dunkelstrukturen eingesetzt werden. In den mit Dunkelstrukturen versehenen Bereichen erscheinen die ursprünglich reflektiven Facetten durch deren lichtabsorbierende Wirkung dunkel.

In einer weiteren Alternative können die Mikro-Dunkelfelder auch nur in den meisten, aber nicht allen Betrachtungsrichtungen dunkel erscheinen. Beispielsweise können die Mikro-Dunkelfelder durch stark verkippte reflektierende Facetten gebildet sein, die alle gleich orientiert sind und nur unter einem bestimmten Winkel gleichzeitig hell aufleuchten. Durch die starke Verkippung ist dieses Aufleuchten allerdings in einen sehr flachen Sichtbarkeitsbereich gelegt, wo es die normale Betrachtung des Sicherheitselements nicht oder kaum stört. Als besonderer Vorteil ergibt sich bei einer solchen Gestaltung, dass neben den reflektierenden Facetten (Mikrospiegeln) keine anderen Mikro- oder Nanostrukturen hergestellt werden müssen und sich somit eine besonders einfache und kostengünstige Herstellung ergibt.

Das gewünschte Graustufenmuster kann auch durch eine rasterartige Demetallisierung und Hinterdrucken mit dunkler Farbe, insbesondere mit Schwarz, erzeugt werden oder durch rasterartiges Überdrucken des Reliefmotivs mit opaker oder lasierender Farbe oder mit Schwarz. Dabei kann ein zweilagiger Aufbau verwendet werden, bei dem die dem Betrachter zugewandte Lage aus den Mikro-Hellfeldern mit den reflektierenden Facetten und aus den ausgesparten (demetallisierten) Bereichen besteht, während die vom Betrachter abgewandte Seite bereichsweise oder vollflächig dunkel, insbesondere schwarz ausgebildet ist. Ist die abgewandte Lage nur bereichsweise dunkel bzw. schwarz ausgebildet, so bevorzugt dort, wo die erste Lage Aussparungen aufweist. Die Dunkel- bzw. Schwarzfärbung der zweiten Lage kann durch Strukturierung mit Dunkelstrukturen erfolgen, aber auch durch schwarze oder dunkle Farbe. Alternativ kann ein mehrlagiger Interferenzschichtaufbau verwenden werden, der typischerweise aus Absorber, Dielektrikum und Reflektor besteht, in anderen Ausführungsformen aber auch aus noch mehr Schichten bestehen kann. Die Hinterdruckung ist nicht zwingend schwarz, sondern kann auch farbig sein, mit Vorteil allerdings mit einer dunklen Farbe, und vorzugsweise im Register zum Reliefmotiv ausgeführt sein.

Die Helligkeit der Mikro-Dunkelflächen in den dunklen Betrachtungsrichtungen beträgt vorzugsweise weniger als 20%, bevorzugt weniger als 10%, besonders bevorzugt weniger als 5% der Helligkeit der Mikro-Hellfelder.

Die reflektierenden Facetten sind vorteilhaft im Wesentlichen als ebene, gegen die x-y-Ebene geneigte Flächenelemente ausgebildet. Die Formulierung "im Wesentlichen" trägt dabei der Tatsache Rechnung, dass sich in der Praxis herstellungsbedingt keine perfekt ebenen Flächenelemente erzeugen lassen. Alternativ können die Facetten auch als gekrümmte, insbesondere konkave, konvexe oder gewellte Flächenelemente ausgebildet sein, und dabei auch Fresnelstrukturen bilden.

Bezogen auf die x-y-Ebene weisen die reflektierenden Facetten vorteilhaft eine Höhe von weniger als 100 µm, bevorzugt von 10 µm oder weniger, besonders bevorzugt von 5 µm oder weniger auf. Die Raumform des reflektiven Flächenbereichs weist somit selbst mit Vorteil keine mit bloßem Auge wahrnehmbaren Höhenunterschiede auf. Die reflektierenden Facetten können in ihrer Höhe über dem Flächenbereich oder alternativ in der x-y-Ebene aperiodisch gegeneinander versetzt sein, um unerwünschte Beugungseffekte zu unterdrücken.

Die reflektiven Facetten weisen mit Vorteil eine metallische oder halbleitende Beschichtung, eine hochbrechende Beschichtung oder eine Beschichtung mit einer farbkippenden Schicht auf.

In einer vorteilhaften Weiterbildung der Erfindung ist vorgesehen, dass der reflektive Flächenbereich mit einer Flüssigkristallbeschichtung versehen ist, vorzugsweise mit einer vollflächigen cholesterischen Flüssigkristallbeschichtung. In den Mikro-Hellfeldern sind die Farbeffekte der Flüssigkristallbeschichtung wegen deren hohen Hintergrundhelligkeit nicht oder kaum sichtbar, während sie vor dem dunklen Hintergrund der Mikro-Dunkelfelder deutlich in Erscheinung treten. Auf diese Weise können metallische Darstellungen, wie etwa metallische 3D-Portraits mit farbigen bzw. farbkippenden Akzentuierungen versehen werden, die den grundlegenden ästhetischen Eindruck der metallischen Darstellungen nicht stören.

Alternativ kann auch eine nematische Flüssigkristallbeschichtung vorgesehen sein, wodurch ein perfekt auf die Anordnung der Mikro-Hellfelder und Mikro-Dunkelfelder gepasserter Polarisationseffekt erzeugt werden kann.

Gemäß einer weiteren vorteilhaften Weiterbildung der Erfindung enthält der reflektive Flächenbereich in einem Teilbereich schmale kontrastierende Linien aus Mikrokavitäten. Die Mikrokavitäten erzeugen in diesem Fall neben den bereits beschriebenen visuellen Vorteilen auch Bereiche hoher Linienschärfe innerhalb des Reliefmotivs, die für das Auslesen mit bildanalysierenden Verfahren, wie sie etwa von Banknoten-Apps verwendet werden, hervorragend geeignet sind und zur Authentisierung des Sicherheitselements eingesetzt werden können.

Bei dem dreidimensionalen Reliefmotiv handelt es sich insbesondere um ein Portrait oder eine realitätsnahe Darstellung von Gegenständen, Tieren oder Pflanzen. Das Graustufenmuster enthält zweckmäßig 4 oder mehr, insbesondere 8 oder mehr, vorteilhaft 16 oder mehr unterschiedliche Helligkeitswerte.

Der lokale relative Anteil der Mikro-Hellfelder An liegt zwischen 100% und 0%, einschließlich der beiden Grenzen, entsprechend liegt der lokale relative Anteil der Mikro-Dunkelfelder A_{D} = 100% - A_{H} zwischen 0% und 100%. Wegen der geringen Größe der Mikro-Hellfelder und Mikro-Dunkelfelder sieht das menschliche Auge keine einzelnen hellen oder dunklen Bildfelder, sondern nimmt lokal bzw. an jedem Bildpunkt (des Reliefmotivs) einen gemittelten Grauwert wahr, der durch den lokalen relativen Anteil der beiden Feldtypen gegeben ist.

Um eine insgesamt räumlicher und heller wirkende Darstellung zu erhalten, beträgt der lokale relative Anteil A_{H} der Mikro-Hellfelder im gesamten reflektiven Flächenbereich (d. h. auch in den dunkelsten Teilbereichen) mit Vorteil mehr als 5 %, besonders bevorzugt mehr als 10 %.

Die Erfindung enthält auch einen Datenträger mit einem Sicherheitselement der beschriebenen Art. Bei dem Datenträger kann es sich insbesondere um ein Wertdokument, wie eine Banknote, insbesondere eine Papierbanknote, eine Polymerbanknote oder eine Folienverbundbanknote, um eine Aktie, eine Anleihe, eine Urkunde, einen Gutschein, einen Scheck, eine hochwertige Eintrittskarte, aber auch um eine Ausweiskarte, wie etwa eine Kreditkarte, eine Bankkarte, eine Barzahlungskarte, eine Berechtigungskarte, einen Personalausweis oder eine Passpersonalisierungsseite handeln.

Der reflektive Flächenbereich kann auch mit anderen Prägestrukturen, beispielsweise anderen Mikrospiegeldarstellungen, Hologrammgittern oder Nanostrukturen nebeneinander angeordnet vorliegen. Die Anordnung kann dabei sowohl streifenweise neben- oder übereinander als auch in Pixelform erfolgen.

Die Erfindung enthält weiter ein in Anspruch 15 definiertes Verfahren zur Herstellung eines Sicherheitselements der oben beschriebenen Art, bei dem
- ein Träger bereitgestellt und mit einem reflektiven Flächenbereich mit einer Vielzahl von Mikro-Hellfeldern und Mikro-Dunkelfeldern versehen wird,
- die Mikro-Hellfelder durch reflektive Facetten gebildet werden, die so orientiert werden, dass der reflektive Flächenbereich für einen Betrachter als dreidimensionales Reliefmotiv mit einer gegenüber seiner tatsächlichen Raumform vor- und/oder zurückspringenden Oberfläche wahrnehmbar ist,
- die Mikro-Dunkelfelder so ausgebildet werden, dass sie im Wesentlichen aus allen Betrachtungsrichtungen dunkel erscheinen, und
- der lokale relative Anteil der Mikro-Hellfelder und der Mikro-Dunkelfelder des reflektiven Flächenbereichs so eingestellt wird, dass sie in reflektiertem Licht zusammen den lokalen Helligkeitswert des vorgegebenen Graustufenmusters erzeugen.

Die beschriebenen Sicherheitselemente, insbesondere mit verschachtelten Nanostrukturen/Mikrospiegelstrukturen, können vorteilhaft mit lithographischen Verfahren, beispielsweise einer e-Beam-Anlage oder einer Laserschreibanlage hergestellt werden. Alternativ kann eine solche Struktur auch in einem zweistufigen lithographischen Prozess erzeugt werden, wobei in einem ersten Schritt die Nanostrukturierung vorgenommen wird, beispielsweise mittels Elektronenstrahllithographie, durch einen optischen Zwei-Photonenabsorptionsprozess oder durch ein Laserstrahlinterferenzverfahren. Aperiodische Mottenaugenstrukturen können außerdem durch Plasmaätzen oder durch Strukturieren mit ultrakurzen Laserpulsen erzeugt werden.

In einem Folgeschritt wird ein solches Original oder eine Kopie davon mit Photolack eingeebnet. Hierzu eignen sich vor allem Spincoating, Spray-Coating oder Dip-Coating Verfahren. Dann wird die Mikrospiegelanordnung in einem weiteren lithographischen Schritt in den Photolack geschrieben und die gewünschten Bereiche der Nanostrukturen freibelichtet. Dieser Prozess kann beispielsweise mit Hilfe eines Laserschreibers im Direktbelichtungsverfahren erfolgen. Das so entstandene Original kann anschließend galvanisch oder unter Verwendung von Photopolymeren (beispielsweise Ormocere) umkopiert werden. Die Oberflächenstruktur eines auf diese Weise hergestellten Stempels kann nun durch ein Step-and-Repeat Verfahren auf einer größeren Fläche nebeneinander vervielfältigt werden. Durch galvanische Abformung dieses auf der Fläche replizierten Originals kann davon ein Prägezylinder hergestellt werden. Die Struktur kann dann in einem kontinuierlichen Rolle-zu-Rolle-Prozess auf Folie geprägt werden. Dabei kommen insbesondere Heißpräge- oder Nanoimprint-Verfahren in Frage. Schließlich wird die geprägte Folie metallisch bedampft, wobei als übliche Bedampfungsverfahren insbesondere Elektronenstrahl-Bedampfen, thermisches Verdampfen oder Sputtern in Frage kommen. Als metallisches Material können Metalle, wie beispielsweise Aluminium, Silber, Kupfer, Palladium, Gold, Chrom, Nickel und/oder Wolfram sowie deren Legierungen eingesetzt werden. Nach dem Bedampfen wird die Struktur einkaschiert bzw. mit einer Deckfolie geschützt.

Ihre reflektierenden Eigenschaften können die Facetten statt durch eine einfache Metallbeschichtung auch durch eine Mehrfachschicht erhalten. Hierbei kommen insbesondere sogenannte Color-Shift-Beschichtungen in Frage, welche aus einer halbtransparenten Metallschicht (Absorber), einer dielektrischen Abstandsschicht und einer darunter befindlichen metallischen Reflexionsschicht bestehen. Als Dielektrika eignen sich insbesondere SiO₂, MgF₂ und Polymere.

Sollen demetallisierte Bereiche in dem Sicherheitselement erzeugt werden, so wird beispielsweise vor dem Bedampfen auf den gewünschten Bereichen Waschfarbe aufgedruckt und diese dann nach dem Bedampfen entfernt. Alternativ können diese Bereiche auch mit Laserdemetallisierung erzeugt werden. Wiederum alternativ können zu diesem Zweck Ätzverfahren eingesetzt werden, nachdem zuvor eine Ätzmaske auf die vollflächige Metallschicht aufgebracht, beispielsweise aufgedruckt wurde.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung einer Banknote mit einem erfindungsgemäßen Sicherheitselement in Form eines aufgeklebten Transferelements,
- Fig. 2: illustriert das Zustandekommen der dreidimensionalen Graustufen-Darstellung und den grundlegenden Aufbau erfindungsgemäßer Sicherheitselemente,
- Fig. 3: ein Beispiel für die Darstellung eines Gegenstands, der mit seiner Forminformation alleine kaum erkennbar ist,
- Fig. 4: in (a) bis (d) verschiedene Varianten der Ausgestaltung von Mikro-Dunkelfeldern, und
- Fig. 5: ein Sicherheitselement nach einem weiteren Ausführungsbeispiel der Erfindung.

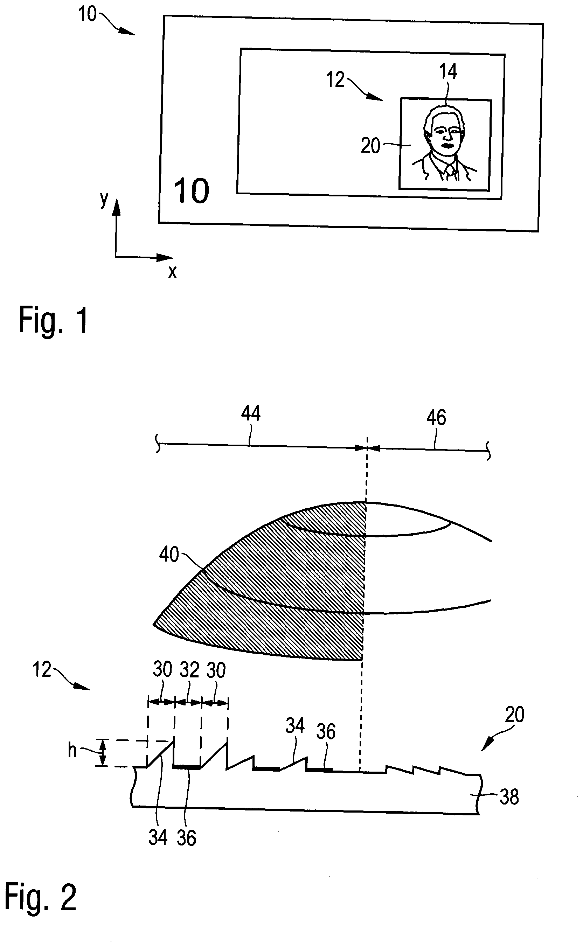

Die Erfindung wird nun am Beispiel von Sicherheitselementen für Banknoten erläutert. Figur 1 zeigt dazu eine schematische Darstellung einer Banknote 10 mit einem erfindungsgemäßen Sicherheitselement 12 in Form eines aufgeklebten Transferelements. Die Erfindung ist allerdings nicht auf Transferelemente und Banknoten beschränkt, sondern kann bei allen Arten von Sicherheitselementen eingesetzt werden, beispielsweise bei Etiketten auf Waren und Verpackungen oder bei der Absicherung von Dokumenten, Ausweisen, Pässen, Kreditkarten, Gesundheitskarten und dergleichen.

Das Sicherheitselement 12 enthält einen reflektiven Flächenbereich 20, dessen Ausdehnung eine x-y-Ebene definiert, die mit der Oberfläche der Banknote 10 zusammenfällt. Das Sicherheitselement 12 ist zwar selbst sehr flach mit maximalen Höhendifferenzen von etwa 10 µm ausgebildet, es zeigt dem Betrachter in reflektiertem Licht aber dennoch ein sich aus der x-y-Ebene herauswölbendes, dreidimensionales Reliefmotiv 14 in Form eines 3D-Portraits. Als Besonderheit ist die dreidimensional gewölbte Fläche des Reliefmotivs 14 mit einem Graustufenmuster mit unterschiedlichen Helligkeitswerten ausgebildet, welches stark zu einem natürlichen und visuell attraktiven Erscheinungsbild des 3D-Portraits beiträgt.

Das Zustandekommen der dreidimensionalen Graustufen-Darstellung und der grundlegende Aufbau erfindungsgemäßer Sicherheitselemente werden nun mit Bezug auf Fig. 2 näher erläutert. Die Figur zeigt schematisch einen Ausschnitt des Sicherheitselements 12 im Querschnitt und über dem Sicherheitselement 12 eine perspektivische Ansicht 40 des vom Betrachter bei der Betrachtung des Sicherheitselements 12 wahrgenommenen gewölbten Reliefmotivs 14.

Der reflektive Flächenbereich 20 des Sicherheitselements 12 enthält eine Vielzahl von Mikro-Hellfeldern 30 und Mikro-Dunkelfeldern 32. Die Mikro-Hellfelder 30 sind durch reflektive Facetten 34 gebildet, die so orientiert sind, dass der reflektive Flächenbereich 20 für einen Betrachter als dreidimensionales Reliefmotiv 14 mit einer gegenüber seiner tatsächlichen Raumform vor- und/oder zurückspringenden Oberfläche 40 wahrnehmbar ist.

In dem Folienträger 38 des Sicherheitselements 12 ist nicht die vom Betrachter wahrgenommene gewölbte Fläche 14, 40 selbst ausgebildet, sondern vielmehr eine Vielzahl reflektierender Facetten 34, die durch ihre Orientierung das Reflexionsverhalten der gewölbten Fläche 14, 40 imitieren, aber eine wesentlich geringere Höhe als die imitierte gewölbte Fläche aufweisen. Da die reflektiven Facetten 34 kleine Mikrospiegel darstellen, wird die Facettenanordnung im Rahmen dieser Beschreibung oft auch als Mikrospiegelanordnung bezeichnet.

Im Ausführungsbeispiel sind die Mikro-Hellfelder 30 mit quadratischem Umriss und einer Kantenlänge von 10 µm ausgebildet. Jedes Mikro-Hellfeld 30 enthält eine reflektierende Facette 34 in Form eines ebenen Flächenelements, das gegen die x-y-Ebene um einen bestimmten Winkel geneigt ist. Der Neigungswinkel einer Facette 34 entspricht dabei gerade dem lokalen Steigungswinkel der imitierten gewölbten Fläche 14, 40. Die Höhe h der reflektierenden Facetten 34, also ihr Höhenunterschied bezogen auf die x-y-Ebene, liegt nur zwischen 0 µm und 10 µm, vorzugsweise zwischen 0 µm und 5 µm, so dass der gesamte reflektive Flächenbereich 20 mit bloßem Auge nicht wahrnehmbare Höhenunterschiede von höchstens 10 µm aufweist.

Da die geometrische Reflexionsbedingung "Einfallswinkel gleich Ausfallswinkel" für die Reflexion von gerichtetem Licht nur von der lokalen Orientierung der reflektierenden Fläche 14, 40 bzw. 20, 34 abhängt und die Facetten 34 wegen ihrer geringen Größe selbst nicht sichtbar sind, zeigt der reflektierende Flächenbereich 20 im Wesentlichen dieselben Reflexionseigenschaften wie die zu imitierende dreidimensionale Fläche 14, 40. Der reflektierende Flächenbereich 20 erzeugt daher beim Betrachter trotz seiner geringen Höhendifferenzen den ausgeprägt dreidimensionalen Eindruck der imitierten Fläche 14, 40.

Um darüber hinaus auch ein Graustufenmuster mit verschiedenen Helligkeitswerten in der Portraitdarstellung 14 erzeugen zu können, enthält der reflektive Flächenbereich 20 neben den genannten Mikro-Hellfeldern 30 auch Mikro-Dunkelfelder 32, die im Wesentlichen aus allen Betrachtungsrichtungen dunkel erscheinen. Durch die Einstellung des lokalen relativen Anteils an Mikro-Hellfeldern 30 und Mikro-Dunkelfeldern 32 können die gewünschten lokalen Helligkeitswerte des Graustufenmusters erzeugt werden.

Beispielsweise soll in dem Ausschnitt der Fig. 2 der rechte Ausschnittsteil 46 mit maximaler Helligkeit (100%) und der linke Ausschnittsteil 44 mit einer um 33% reduzierten Helligkeit (67%) erscheinen. Entsprechend wird im rechten Ausschnittsteil 46 ein relativer Anteil von 100% Mikro-Hellfeldern 30 und 0% Mikro-Dunkelfeldern gewählt, im linken Ausschnittsteil 44 dagegen ein relativer Anteil von 67% Mikro-Hellfeldern 30 und 33% Mikro-Dunkelfeldern 32.

Die Mikro-Dunkelfelder 32 sind im Ausführungsbeispiel durch Felder mit Mottenaugenstrukturen 36 gebildet, die einen hohen Anteil des einfallenden Lichts absorbieren und daher aus einem sehr breiten Betrachtungswinkelbereich dunkel erscheinen. Wegen ihrer geringen Abmessungen sind die Mikro-Hellfelder 30 und Mikro-Dunkelfelder 32 selbst für einen Betrachter nicht erkennbar, das menschliche Auge nimmt vielmehr nur gemittelt insgesamt hellere oder dunklere Teilbereiche (Bildpunkte) innerhalb des Reliefmotivs 14, 40 wahr.

Wie beschrieben sind die reflektiven Facetten 34 der Mikro-Hellfelder 30 so orientiert, dass der reflektive Flächenbereich 20 für einen Betrachter als dreidimensionales Reliefmotiv 14 mit einer gegenüber seiner tatsächlichen Raumform vor- und/oder zurückspringenden Oberfläche 40 wahrnehmbar ist. Die tatsächliche Raumform des reflektiven Flächenbereichs 20 ist durch die Abfolge der geneigten Facetten 34 der Mikro-Hellfelder 30 und der Mottenaugenstrukturen 36 der Mikro-Dunkelfelder 32 gegeben.

Wegen der Allgemeinheit der beschriebenen Konstruktion lassen sich mit geeignet ausgebildeten reflektiven Flächenbereichen 20 praktisch beliebige dreidimensional wahrnehmbare Motive mit Graustufenmuster erzeugen. Besonders Portraits und andere realitätsnahe Darstellungen von Gegenständen, Tieren oder Pflanzen gewinnen durch die Graustufendarstellung deutlich an Plastizität und Natürlichkeit.

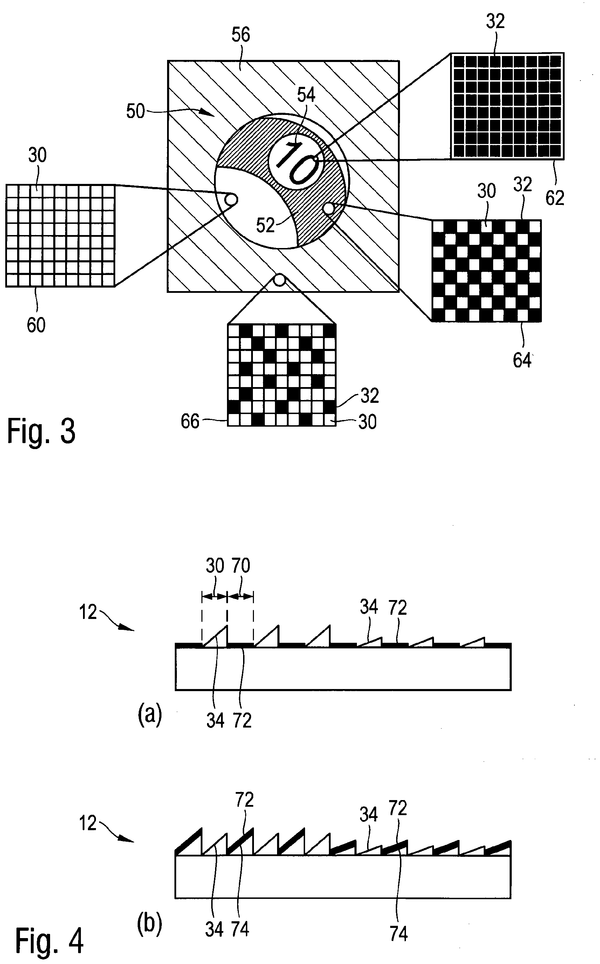

Als Beispiel für die Darstellung eines Gegenstands, der mit seiner Forminformation alleine kaum erkennbar ist, zeigt Fig. 3 eine Billardkugel 50. Da Billardkugeln sehr glatt sind und eine nahezu perfekte Kugeloberfläche aufweisen, sieht der Betrachter bei einer herkömmlichen Wölbdarstellung mit Mikrospiegeln lediglich eine Kugel, nicht aber den umlaufenden farbigen Streifen 52 oder die aufgedruckte Nummer 54, und erkennt die Kugel daher nicht ohne weiteres als Billardkugel 50.

Für eine realistischere Darstellung wird die Reliefmotiv "Kugel" daher mit einem Graustufenmuster kombiniert, das auch den umlaufenden Streifen 52 und die Nummer 54 der Billardkugel berücksichtigt. Zudem ist ein ebener Hintergrundbereich 56 vorgesehen, auf dem die Billardkugel 50 platziert ist.

An den Stellen, an denen das Graustufenmuster weiß ist, wird ein relativer Anteil von 100% Mikro-Hellfeldern 30 und 0% Mikro-Dunkelfeldern gewählt, wie im Detailausschnitt 60 der Fig. 3 gezeigt. An den Stellen, an denen das Graustufenmuster schwarz ist, was vorliegend im Bereich der Ziffern "1" und "0" der Nummer 54 der Fall ist, wird ein relativer Anteil von 0% Mikro-Hellfeldern und 100% Mikro-Dunkelfeldern 32 gewählt, wie im Detailausschnitt 62 gezeigt.

Im umlaufenden Streifen 52 soll die Helligkeit im Ausführungsbeispiel nur 50% der Maximalhelligkeit betragen, dort ist ein relativer Anteil von 50% Mikro-Hellfeldern 30 und 50% Mikro-Dunkelfeldern 32 gewählt (Detailausschnitt 64). Die reflektiven Facetten 34 der Mikro-Hellfelder 30 sind dabei auch im Streifenbereich 52 so orientiert, dass für einen Betrachter die gewölbte Kugelform sichtbar wird.

Im Hintergrundbereich 56 soll die Helligkeit beispielsweise 75% der Maximalhelligkeit betragen, dort ist ein relativer Anteil von 75% Mikro-Hellfeldern 30 und 25% Mikro-Dunkelfeldern 32 gewählt, wie im Detailausschnitt 66 gezeigt. Im Hintergrundbereich 56 sind die reflektiven Facetten 34 der Mikro-Hellfelder 30 parallel zur x-y-Ebene orientiert und erzeugen so den Eindruck einer hellgrauen ebenen Fläche, auf der die Billardkugel rollt.

Der Detailausschnitt 64 der Figur 3 zeigt beispielhaft eine regelmäßige Anordnung von Mikro-Hellfeldern 30 und Mikro-Dunkelfeldern 32 in einem zweidimensionalen Pixelraster. Der relative Anteil der beiden Felderarten kann jedoch auch durch andere Halbtonrasterverfahren, beispielsweise mittels Schwellwertmatrizen oder stochastischen Halbtonrasterverfahren eingestellt werden, wie etwa im Detailausschnitt 66 illustriert.

Vor allem bei relativ dunklen Graustufenmustern kann es sich empfehlen, auch in den dunkelsten Teilbereichen den Anteil an Mikro-Hellfeldern nicht auf 0%, sondern auf einen vorbestimmten Minimalwert, beispielsweise 5% oder 10% abzusenken. Auf diese Weise ist auch in den dunklen Teilbereichen ein gewisser Anteil an einen Wölbeffekt erzeugenden, orientierten Facetten 34 vorhanden, so dass die Darstellung insgesamt räumlicher und heller wirkt.

Der reflektive Flächenbereich erzeugt durch die beschriebene Vorgehensweise insgesamt eine Graustufen-Wölbdarstellung der Billardkugel 50, bei der neben der dreidimensionalen, zum Betrachter hin gewölbten Form der Kugel auch der Streifen 52 und die Nummer 54 der Kugel sichtbar sind, so dass die erzeugte Darstellung leicht als Billardkugel 50 erkennbar ist.

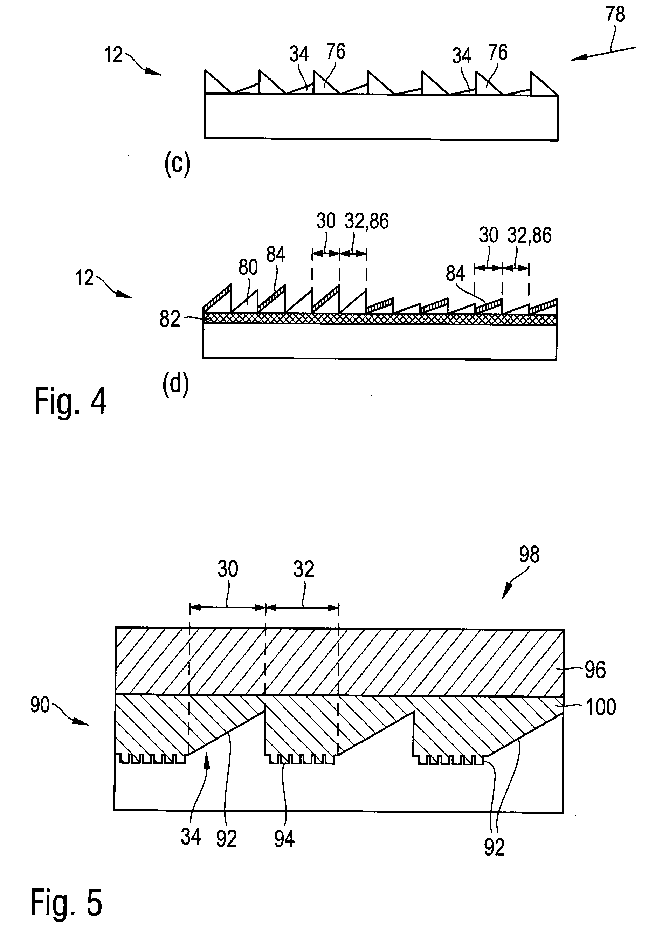

Figur 4 zeigt in (a) bis (d) verschiedene Varianten der Ausgestaltung von Mikro-Dunkelfeldern, wobei zur Illustration jeweils ein regelmäßiges Raster mit einem Anteil von 50% Mikro-Hellfeldern 30 und 50% Mikro-Dunkelfeldern gezeigt ist. Die reflektiven Facetten 34 der Mikro-Hellfelder können dabei in allen Erfindungsvarianten eine reflektierende Beschichtung aufweisen, auch wenn eine solche Beschichtung nur in manchen Figuren explizit dargestellt ist.

Bei der Ausgestaltung der Fig. 4(a) sind die Mikro-Dunkelfelder des Sicherheitselements 12 durch Felder 70 mit Dunkelstrukturen 72 gebildet, die die Felder 70 aus einem breiten Betrachtungswinkelbereich dunkel erscheinen lassen. Als Dunkelstrukturen 72 kommen insbesondere (beispielsweise metallisch bedampfte) Mikrokavitätenstrukturen und Mottenaugenstrukturen, metallisch bedampfte Randomoberflächen, metallisierte Kreuzgitter mit einer Subwellenlängenperiode unterhalb von 420 nm und Subwellenlängengitter zum Einsatz. Auch eine Anordnung aus einer Vielzahl metallisch beschichteter, eng benachbarter Vertiefungen mit hohem Tiefen-zu-Breiten-Verhältnis kommt in Betracht.

In der in Fig. 4(b) gezeigten Abwandlung des Sicherheitselements 12 sind die Mikro-Dunkelfelder durch mit Dunkelstrukturen 72 versehene orientierte Facetten 74 gebildet. Als Dunkelstrukturen 72 können dabei dieselben Strukturen wie bei Fig. 4(a) eingesetzt werden. Im Ausführungsbeispiel der Fig. 4(b) sind die Dunkelstrukturen 72 registriert zu den Facetten 74 angeordnet, es ist allerdings auch möglich, Dunkelstrukturen 72 in einem anderen Raster als die Facetten 74 anzuordnen oder die Dunkelstrukturen 72 aperiodisch auf einer periodischen Facettenanordnung vorzusehen.

Bei einer weiteren Gestaltung sind die Mikro-Dunkelfelder des Sicherheitselements 12 durch gegen die x-y-Ebene stark verkippte reflektierende Facetten 76 gebildet, welche untereinander alle gleich orientiert sind, wie schematisch in Fig. 4(c) dargestellt. Die Mikro-Dunkelfelder der Fig. 4(c) erscheinen aus den meisten, aber nicht aus allen Richtungen dunkel, da aus einer bestimmten Betrachtungsrichtung 78 alle stark verkippten Facetten 76 gleichzeitig hell aufleuchten. Durch die starke Verkippung ist dieses Aufleuchten allerdings in eine sehr flache Betrachtungsrichtung gelegt und stört die normale Betrachtung des Sicherheitselements kaum. Dafür ergibt sich als besonderer Vorteil dieser Gestaltung, dass außer Mikrospiegeln, nämlich den Facetten 34 und 76, keine andersartigen Mikro- oder Nanostrukturen gefertigt werden müssen, so dass sich eine besonders einfache und kostengünstige Herstellung ergibt.

In einer weiteren Erfindungsvariante sind die Mikro-Dunkelfelder des Sicherheitselements 12 durch dunkle, insbesondere schwarze Farbfelder 86 gebildet, wie in Fig. 4(d) gezeigt. In diesem Ausführungsbeispiel liegt ein durchgehendes Facettenraster 80 aus geeignet orientierten transparenten Facetten vor, das sich sowohl auf die Mikro-Hellfelder als auch die Mikro-Dunkelfelder erstreckt, und das über einer dunklen Farbschicht 82 angeordnet ist. In den Mikro-Hellfeldern 30 erhalten die Facetten ihre Reflexionseigenschaften durch eine reflektierende metallische Beschichtung 84, die zunächst vollflächig auf das Facettenraster 80 aufgebracht und dann in den gewünschten Teilbereichen, nämlich gerade in den Mikro-Dunkelfeldern 32, durch einen Demetallisierungsschritt entfernt wird. In den Mikro-Dunkelfeldern 32 ist für einen Betrachter somit durch die transparenten Facetten hindurch die dunkle Farbschicht 82 sichtbar, welche dort somit die gewünschten dunklen Farbfelder 86 ausbildet. Im Ausführungsbeispiel der Fig. 4(d) sind die Demetallisierungen registriert zu den Facetten des Facettenrasters 80 angeordnet, es ist allerdings auch möglich, die Demetallisierungen in einem anderen Raster als die Facetten anzuordnen oder die Demetallisierungen aperiodisch auf einer periodischen Facettenanordnung vorzusehen.

Bei der in Fig. 5 gezeigten Weiterbildung enthält der reflektive Flächenbereich 98 des gezeigten Sicherheitselements 90 eine rasterförmige Anordnung von Mikro-Hellfeldern 30 und Mikro-Dunkelfeldern 32, die beispielsweise jeweils Abmessungen von 10 µm x 10 µm aufweisen. Die Mikro-Hellfelder 30 sind durch orientierte Facetten 34 gebildet, die durch ihre Beschichtung mit einer (in der Darstellung der Fig. 5 nur angedeuteten) Aluminium-Schicht 92 eine silbrig-glänzende Reflexion zeigen.

In den Mikro-Dunkelfeldern 32 ist eine Mehrzahl von nebeneinanderliegenden Mikrokavitäten 94 vorgesehen, die in einer zur Oberseite parallel liegenden Raumrichtung jeweils eine Ausdehnung zwischen 0,7 µm und 2 µm, konkret beispielsweise eine Ausdehnung von 1 µm x 1 µm aufweisen, und die ebenfalls mit der Aluminiumschicht 92 versehen sind. Durch die geringe Lichtrückstreuung der Mikrokavitäten 94 erscheinen die Mikro-Dunkelfelder 32 aus einem großen Betrachtungswinkelbereich dunkel. Alternativ können in den Mikro-Dunkelfeldern 32 beispielsweise auch Mottenaugenstrukturen oder andere der oben genannten Dunkelstrukturen ausgebildet sein, um einen dunklen Eindruck bei der Betrachtung zu erzeugen.

Im Ausführungsbeispiel ist der gesamte reflektive Flächenbereich 98 des Sicherheitselements 90 vollflächig in ein transparentes Material, beispielsweise eine Lackschicht 100, eingebettet, so dass der reflektive Flächenbereich 98 eingeebnet und eine im Wesentlichen ebene Oberfläche erhalten wird. Auf die Lackschicht 100 ist vorzugsweise vollflächig eine cholesterische Flüssigkristallbeschichtung 96 aufgebracht. Die Farbigkeit und der Farbkippeffekt der Flüssigkristallbeschichtung 96 treten in den Mikro-Hellfeldern 30 durch den Überstrahlungseffekt der hochreflektierenden Aluminiumschicht 92 nicht oder kaum in Erscheinung, sie sind jedoch vor dem dunklen Hintergrund der Mikro-Dunkelfelder 32 deutlich sichtbar.

Auf diese Weise lassen sich kleine farbige Bereiche in metallischen Darstellungen, insbesondere metallischen 3D-Portraits, schaffen, die zwar farbig bzw. farbkippend sind, aber keine zu dominante Farbigkeit zeigen und somit den ästhetischen Eindruck des 3D-Portraits nicht stören.

### Bezugszeichenliste

- 10: Banknote
- 12: Sicherheitselement
- 14: dreidimensionales Reliefmotiv
- 20: reflektiver Flächenbereich
- 30: Mikro-Hellfelder
- 32: Mikro-Dunkelfelder
- 34: reflektive Facetten
- 36: Mottenaugenstrukturen
- 38: Folienträger
- 40: perspektivische Ansicht des Reliefmotivs
- 44, 46: Ausschnittsteile
- 50: Billardkugel
- 52: umlaufender Streifen
- 54: aufgedruckte Nummer
- 56: Hintergrundbereich
- 60, 62, 64, 66: Detailausschnitte
- 70: Felder
- 72: Dunkelstrukturen
- 74: Facetten
- 76: stark verkippte reflektierende Facetten
- 78: Betrachtungsrichtung
- 80: Facettenraster
- 82: dunkle Farbschicht
- 84: metallische Beschichtung
- 86: dunkle Farbfelder
- 90: Sicherheitselement
- 92: Aluminium-Schicht
- 94: Mikrokavitäten
- 96: cholesterische Flüssigkristallbeschichtung
- 98: reflektiver Flächenbereich
- 100: Lackschicht

## Patentansprüche

1. Sicherheitselement (12) zur Absicherung von Wertgegenständen, mit einem reflektiven Flächenbereich (20), dessen Ausdehnung eine x-y-Ebene definiert und der bei Betrachtung in reflektiertem Licht ein dreidimensionales Reliefmotiv (14; 40) mit einem vorgegebenen Graustufenmuster mit unterschiedlichen Helligkeitswerten erzeugt, wobei
- der reflektive Flächenbereich (20) eine Vielzahl von Mikro-Hellfeldern (30) und Mikro-Dunkelfeldern (32) enthält,
- die Mikro-Hellfelder durch reflektive Facetten (34) gebildet sind, die so orientiert sind, dass der reflektive Flächenbereich (20) für einen Betrachter als dreidimensionales Reliefmotiv (14) mit einer gegenüber seiner tatsächlichen Raumform vor- und/oder zurückspringenden Oberfläche (40) wahrnehmbar ist,
- die Mikro-Dunkelfelder (32) im Wesentlichen aus allen Betrachtungsrichtungen dunkel erscheinen, und
- der lokale relative Anteil der Mikro-Hellfelder (30) und der Mikro-Dunkelfelder (32) des reflektiven Flächenbereichs (20) so eingestellt ist, dass sie in reflektiertem Licht zusammen den lokalen Helligkeitswert des vorgegebenen Graustufenmusters erzeugen.

2. Sicherheitselement nach Anspruch 1, **dadurch gekennzeichnet, dass** die Mikro-Hellfelder und Mikro-Dunkelfelder in der x-y-Ebene in zumindest einer, vorzugsweise in allen Richtungen Abmessungen unterhalb von 200 µm, bevorzugt unterhalb von 100 µm, besonders bevorzugt unterhalb von 30 µm aufweisen.

3. Sicherheitselement nach Anspruch 1 oder 2, **dadurch gekennzeichnet, dass** die Mikro-Hellfelder und Mikro-Dunkelfelder periodisch angeordnet sind, vorzugsweise in einem regelmäßigen zweidimensionalen Punktraster.

4. Sicherheitselement nach wenigstens einem der Ansprüche 1 bis 3, **dadurch gekennzeichnet, dass** die Mikro-Hellfelder zumindest teilweise in Form reflektiver Pixel ausgebildet sind, die jeweils mehrere, gleich orientierte reflektive Facetten aufweisen.

5. Sicherheitselement nach wenigstens einem der Ansprüche 1 bis 4, **dadurch gekennzeichnet, dass** die Mikro-Dunkelfelder über einen Betrachtungswinkelbereich von mehr als 45 °, bevorzugt von mehr als 60 ° und besonders bevorzugt von mehr als 90 ° dunkel erscheinen.

6. Sicherheitselement nach wenigstens einem der Ansprüche 1 bis 5, **dadurch gekennzeichnet, dass** die Mikro-Dunkelfelder durch Felder mit Dunkelstrukturen, durch mit Dunkelstrukturen versehene orientierte Facetten, durch gleich orientierte, gegen die x-y-Ebene stark verkippte reflektierende Facetten, oder durch dunkle, insbesondere schwarze Farbfelder gebildet sind.

7. Sicherheitselement nach Anspruch 6, **dadurch gekennzeichnet, dass** die Dunkelstrukturen durch Mikrokavitäten, Mottenaugenstrukturen, insbesondere metallisch bedampfte Mikrokavitäten, Mottenaugenstrukturen, metallisch bedampfte Randomoberflächen, metallisierte Kreuzgitter mit einer Subwellenlängenperiode unterhalb von 420 nm, Subwellenlängengitter, und/oder Anordnungen mit einer Vielzahl metallisch beschichteter, eng benachbarter Vertiefungen mit hohem Tiefen-zu-Breiten-Verhältnis gebildet sind.

8. Sicherheitselement nach wenigstens einem der Ansprüche 1 bis 7, **dadurch gekennzeichnet, dass** die Helligkeit der Mikro-Dunkelflächen in den dunklen Betrachtungsrichtungen weniger als 20%, bevorzugt weniger als 10%, besonders bevorzugt weniger als 5% der Helligkeit der Mikro-Hellfelder beträgt.

9. Sicherheitselement nach wenigstens einem der Ansprüche 1 bis 8, **dadurch gekennzeichnet, dass** die reflektierenden Facetten im Wesentlichen als ebene, gegen die x-y-Ebene geneigte Flächenelemente ausgebildet sind.

10. Sicherheitselement nach wenigstens einem der Ansprüche 1 bis 9, **dadurch gekennzeichnet, dass** die reflektierenden Facetten bezogen auf die x-y-Ebene eine Höhe von weniger als 100 µm, bevorzugt von 10 µm oder weniger, besonders bevorzugt von 5 µm oder weniger aufweisen.

11. Sicherheitselement nach wenigstens einem der Ansprüche 1 bis 10, **dadurch gekennzeichnet, dass** die reflektiven Facetten eine metallische oder halbleitende Beschichtung, eine hochbrechende Beschichtung oder eine Beschichtung mit einer farbkippenden Schicht aufweisen.

12. Sicherheitselement nach wenigstens einem der Ansprüche 1 bis 11, **dadurch gekennzeichnet, dass** der reflektive Flächenbereich mit einer Flüssigkristallbeschichtung versehen ist, vorzugsweise mit einer vollflächigen cholesterischen Flüssigkristallbeschichtung.

13. Sicherheitselement nach wenigstens einem der Ansprüche 1 bis 12, **dadurch gekennzeichnet, dass** der reflektive Flächenbereich in einem Teilbereich schmale kontrastierende Linien aus Mikrokavitäten enthält.

14. Datenträger mit einem Sicherheitselement nach wenigstens einem der Ansprüche 1 bis 13.

15. Verfahren zum Herstellen eines Sicherheitselements (12) nach einem der Ansprüche 1 bis 13, bei dem
- ein Träger (38) bereitgestellt und mit einem reflektiven Flächenbereich (20) mit einer Vielzahl von Mikro-Hellfeldern (30) und Mikro-Dunkelfeldern (32) versehen wird,
- die Mikro-Hellfelder (30) durch reflektive Facetten (34) gebildet werden, die so orientiert werden, dass der reflektive Flächenbereich für einen Betrachter als dreidimensionales Reliefmotiv (14) mit einer gegenüber seiner tatsächlichen Raumform vor- und/oder zurückspringenden Oberfläche (40) wahrnehmbar ist,
- die Mikro-Dunkelfelder (32) so ausgebildet werden, dass sie im Wesentlichen aus allen Betrachtungsrichtungen dunkel erscheinen, und
- der lokale relative Anteil der Mikro-Hellfelder (30) und der Mikro-Dunkelfelder (32) des reflektiven Flächenbereichs (20) so eingestellt wird, dass sie in reflektiertem Licht zusammen den lokalen Helligkeitswert des vorgegebenen Graustufenmusters erzeugen.

## Claims

1. A security element (12) for securing valuable articles, having a reflective areal region (20) whose expanse defines an x-y plane and that, when viewed in reflected light, produces a three-dimensional relief motif (14; 40) having a specified grayscale pattern having different brightness values,
- the reflective areal region (20) including a plurality of micro light fields (30) and micro dark fields (32),
- the micro light fields being formed by reflective facets (34) that are oriented in such a way that the reflective areal region (20) is perceptible for a viewer as a three-dimensional relief motif (14) having a surface (40) that jumps out and/or back with respect to its actual spatial form,
- the micro dark fields (32) appearing dark substantially from all viewing directions, and
- the local relative proportion of the micro light fields (30) and the micro dark fields (32) in the reflective areal region (20) being set in such a way that together, in reflected light, they produce the local brightness value of the specified grayscale pattern.

2. The security element according to claim 1, **characterized in that** the micro light fields and micro dark fields in the x-y plane have, in at least one, preferably in all directions, dimensions below 200 µm, preferably below 100 µm, particularly preferably below 30 µm.

3. The security element according to claim 1 or 2, **characterized in that** the micro light fields and micro dark fields are arranged periodically, preferably in a regular two-dimensional dot grid.

4. The security element according to at least one of claims 1 to 3, **characterized in that** the micro light fields are developed at least partially in the form of reflective pixels that each comprise multiple, identically oriented reflective facets.

5. The security element according to at least one of claims 1 to 4, **characterized in that** the micro dark fields appear dark over a viewing angle range of more than 45°, preferably of more than 60° and particularly preferably of more than 90°.

6. The security element according to at least one of claims 1 to 5, **characterized in that** the micro dark fields are formed by fields having dark structures, by oriented facets furnished with dark structures, by identically oriented reflective facets that are strongly tilted against the x-y plane, or by dark, especially black color fields.

7. The security element according to claim 6, **characterized in that** the dark structures are formed by microcavities, moth-eye structures, especially microcavities evaporated with metal, moth-eye structures, random surfaces evaporated with metal, metalized cross-line gratings having a subwavelength period below 420 nm, subwavelength gratings, and/or arrangements having a plurality of metallically coated, closely adjacent depressions having a high depth-to-width ratio.

8. The security element according to at least one of claims 1 to 7, **characterized in that** the brightness of the micro dark areas in the dark viewing directions is less than 20%, preferably less than 10%, particularly preferably less than 5% of the brightness of the micro light fields.

9. The security element according to at least one of claims 1 to 8, **characterized in that** the reflective facets are developed substantially as planar areal elements that are inclined against the x-y plane.

10. The security element according to at least one of claims 1 to 9, **characterized in that** the reflective facets have, in relation to the x-y plane, a height of less than 100 µm, preferably of 10 µm or less, particularly preferably of 5 µm or less.

11. The security element according to at least one of claims 1 to 10, **characterized in that** the reflective facets comprise a metallic or semiconducting coating, a high-index coating or a coating having a color-shifting layer.

12. The security element according to at least one of claims 1 to 11, **characterized in that** the reflective areal region is furnished with a liquid crystal coating, preferably with a contiguous cholesteric liquid crystal coating.

13. The security element according to at least one of claims 1 to 12, **characterized in that** the reflective areal region includes, in a sub-region, narrow contrasting lines composed of microcavities.

14. A data carrier having a security element according to at least one of claims 1 to 13.

15. A method for manufacturing a security element (12) according to one of claims 1 to 13, in which
- a carrier (38) is provided and is furnished with a reflective areal region (20) having a plurality of micro light fields (30) and micro dark fields (32),
- the micro light fields (30) are formed by reflective facets (34) that are oriented in such a way that the reflective areal region is perceptible for a viewer as a three-dimensional relief motif (14) having a surface (40) that jumps out and/ or back with respect to its actual spatial form,
- the micro dark fields (32) are developed in such a way that they appear dark substantially from all viewing directions, and
- the local relative proportion of the micro light fields (30) and the micro dark fields (32) of the reflective areal region (20) is set in such a way that together, in reflected light, they produce the local brightness value of the specified grayscale pattern.

## Revendications

1. Elément de sécurité (12) pour la sécurisation d'objets de valeur avec une zone de surface (20) réfléchissante, dont l'extension définit un plan x-y et produit en observation dans la lumière réfléchissante un motif en relief (14 ; 40) tridimensionnel avec un motif à nuances de gris prédéfini avec des valeurs de brillance différentes,
- la zone de surface réfléchissante (20) contenant une pluralité de micro-champs clairs (30) et micro-champs sombres (32),
- les micro-champs clairs étant formés par des facettes réfléchissantes (34), qui sont orientées de telle manière que la zone de surface réfléchissante (20) peut être perçue pour un observateur comme un motif en relief tridimensionnel (14) avec une surface (40) saillante et/ ou en retrait par rapport à sa forme spatiale effective,
- les micro-champs sombres (32) semblant sombres pour l'essentiel à partir de toutes les directions d'observation, et
- la partie locale relative des micro-champs clairs (30) et des micro-champs sombres (32) de la zone de surface réfléchissante (20) étant établie de telle manière qu'ils produisent dans la lumière réfléchissante ensemble la valeur de brillance locale du modèle de nuances de gris prédéfini.

2. Elément de sécurité selon la revendication 1, **caractérisé en ce que** les micro-champs clairs et micro-champs sombres dans le plan x-y comportent dans au moins une direction, de préférences dans toutes les directions, des dimensions en dessous de 200 µm, de préférence en dessous de 100 µm, en particulier de préférence en dessous de 30 µm.

3. Elément de sécurité selon la revendication 1 ou 2, **caractérisé en ce que** les micro-champs clairs et les micro-champs sombres sont disposés périodiquement, de préférence dans une trame à points régulière bidimensionnelle.

4. Elément de sécurité selon au moins l'une quelconque des revendications 1 à 3, **caractérisé en ce que** les micro-champs clairs sont constitués au moins en partie sous la forme de points d'image (pixels) réfléchissants, qui comportent respectivement plusieurs facettes réfléchissantes orientées de la même façon.

5. Elément de sécurité selon au moins l'une quelconque des revendications 1 à 4, **caractérisé en ce que** les micro-champs sombres semblent sombres sur une zone angulaire d'observation de plus de 45°, de préférence de plus de 60° et en particulier de préférence de plus de 90°.

6. Elément de sécurité selon au moins l'une quelconque des revendications 1 à 5, **caractérisé en ce que** les micro-champs sombres sont formés par des champs avec des structures sombres, par des facettes orientées dotées de structures sombres, par des facettes réfléchissantes orientées de la même façon, fortement basculées par rapport au plan x-y ou par des champs de couleur sombres, en particulier noirs.

7. Elément de sécurité selon la revendication 6, **caractérisé en ce que** les structures sombres sont formées par des microcavités, des structures en forme d'œil de mite, en particulier microcavités métallisées sous vide, des structures en forme d'œil de mite, des surfaces aléatoires métallisées sous vide, des grilles croisées métallisées avec une période de sous-longueur d'ondes en dessous de 420 nm, des grilles de sous-longueur d'ondes, et/ ou des systèmes avec une pluralité de cavités à revêtement métallique, étroitement serrées avec un rapport Profondeur-Largeur élevé.

8. Elément de sécurité selon au moins l'une quelconque des revendications 1 à 7, **caractérisé en ce que** la brillance des micro-surfaces sombres dans les directions d'observation sombres est inférieure à 20 %, de préférence de moins de 10 %, en particulier de préférence de moins de 5 % de la brillance des micro-champs clairs.

9. Elément de sécurité selon au moins l'une quelconque des revendications 1 à 8, **caractérisé en ce que** les facettes réfléchissantes sont constituée pour l'essentiel comme des éléments de surface plans, inclinés par rapport au plan x-y.

10. Elément de sécurité selon au moins l'une quelconque des revendications 1 à 9, **caractérisé en ce que** les facettes réfléchissantes comportent par rapport au plan x-y une hauteur de moins de 100 µm, de préférence de 10 µm ou moins, en particulier de préférence de 5 µm ou moins.

11. Elément de sécurité selon au moins l'une quelconque des revendications 1 à 10, **caractérisé en ce que** les facettes réfléchissantes comportent un revêtement métallique ou semi-conducteur, un revêtement réfringent ou un revêtement avec une couche à changement de couleur.

12. Elément de sécurité selon au moins l'une quelconque des revendications 1 à 11, **caractérisé en ce que** la zone de surface réfléchissante est dotée d'un revêtement à cristaux liquides, de préférence d'un revêtement à cristaux liquides cholestériques sur toute la surface.

13. Elément de sécurité selon au moins l'une quelconque des revendications 1 à 12, **caractérisé en ce que** la zone de surface réfléchissante contient dans une partie de zone des lignes étroites contrastantes de microcavités.

14. Support de données avec un élément de sécurité selon au moins l'une quelconque des revendications 1 à 13.

15. Procédé de fabrication d'un élément de sécurité (12) selon l'une quelconque des revendications 1 à 13, pour lequel
- un support (38) est préparé et est doté d'une zone de surface réfléchissante (20) avec une pluralité de micro-champs clairs (30) et de micro-champs sombres (32),
- les micro-champs clairs (30) sont formés par des facettes réfléchissantes (34), qui sont orientées de telle manière que la zone de surface réfléchissante peut être perçue pour un observateur comme un motif en relief tridimensionnel (14) avec une surface saillante et/ ou en retrait (40) par rapport à sa forme spatiale effective,
- les micro-champs sombres (32) sont constitués de telle manière qu'ils semblent sombres pour l'essentiel à partir de toutes les directions d'observation, et
- la partie locale relative des micro-champs clairs (30) et des micro-champs sombres (32) de la zone de surface réfléchissante (20) est établie de telle manière qu'ils produisent dans la lumière réfléchissante ensemble la valeur de brillance locale du modèle de nuances de gris prédéfini.
